(19) Europäisches Patentamt
European Patent Office
Office européen des brevets

(11) **EP 4 506 579 A1**

(12) **EUROPEAN PATENT APPLICATION**

(43) Date of publication:
**12.02.2025 Bulletin 2025/07**

(21) Application number: **24191720.2**

(22) Date of filing: **30.07.2024**

(51) International Patent Classification (IPC):
**F16C 19/36** (2006.01)     **F16C 33/46** (2006.01)
**F16C 33/54** (2006.01)

(52) Cooperative Patent Classification (CPC):
**F16C 19/364; F16C 33/4676; F16C 33/4682;
F16C 33/541; F16C 33/542; F16C 33/545**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023 CN 202310988835**

(71) Applicant: **Aktiebolaget SKF
415 50 Göteborg (SE)**

(72) Inventors:
• **Qi, Hongbing
  Dalian, 116023 (CN)**
• **Fritz, Dominik
  97074 Würzburg (DE)**
• **Hofmann, Sabine
  97273 Kürnach (DE)**
• **Zhu, Jinguang
  Dalian, 116092 (CN)**

(74) Representative: **Kuhstrebe, Jochen
SKF GmbH
Gunnar-Wester-Straße 12
97421 Schweinfurt (DE)**

(54) **BEARING CAGE FOR A ROLLER BEARING**

(57)     Disclosed is a bearing cage (1) configured for use in a roller bearing, in particular a roller bearing having a large diameter, the bearing cage (1) comprising at least a first ring element (2) extending in a circumferential direction (u) of the bearing cage (1), at least one cage bar (6) extending substantially in an axial direction of the bearing cage (1), wherein the at least one cage bar (6) is connected to the first ring element (2) at a first connection region (12), wherein in the first connection region (12) a recess (14) is provided which extends into the first ring element (2), wherein the recess (14) has a curvature having a predetermined radius (r).

Fig. 1

EP 4 506 579 A1

**EP 4 506 579 A1**

## Description

Technical field of the invention

The present disclosure is directed to a bearing cage for a roller bearing, in particular for a tapered roller bearing, and to a roller bearing, in particular a tapered roller bearing, including such a bearing cage.

Background of the invention

Bearing cages are usually used in roller bearings to support and guide the rolling elements of the roller bearing, preferably in a uniformly spaced manner. Such bearing cages can be manufactured from metal or plastic. The cage itself usually consists of two ring elements axially offset from each other, which are connected to each other via cage bars, so that pockets are formed between the ring elements and cage bars, in which pockets the rolling elements are received. However, this also means that the rolling elements received in the pockets and the elements of the cage that form the pockets interact with each other, so that the bearing cage is subjected to heavy loads.

Here it has been found that in particular in the case of roller bearings wherein the cages have a substantially angular shape, the structural loading of the cage in the corners, i.e., in the transition region between cage bar and ring element, is particularly high. In order to reduce this load concentration in the corners of the pockets, it has been proposed to increase the radius of curvature in the corners of the pockets. However, with roller-shaped rolling elements this leads to interference with the edge reductions provided on the rollers, so that the radius of curvature in the corners of the pockets cannot be increased arbitrarily. Furthermore, in applications that require a roller bearing having a large diameter, for example wind turbines, the loads acting on the bearing cage increase even further.

It is therefore object of the present invention, to provide a bearing cage of a rolling-element bearing, in particular for a tapered roller bearing, which bearing cage has a large structural load-bearing capacity.

Summary of the invention

This object is solved by a bearing cage according to claim 1.

In the following a bearing cage for use in a roller bearing, in particular a roller bearing having a large diameter, is provided. For example, a diameter of the outer ring may be larger than 1 meter. More particularly, the roller bearing may be a tapered roller bearing. For example, the roller bearing may be used in a wind turbine. The bearing cage comprises at least a first ring element extending in a circumferential direction of the bearing cage, at least one cage bar extending substantially in an axial direction of the bearing cage, wherein the at least one cage bar is connected to the first ring element at a first connection region, wherein in the first connection region a recess is provided which extends into the first ring element. More particularly, if roller bearing is a tapered roller bearing, the first ring element may be the large diameter ring element.

Moreover, the at least one cage bar may have a predetermined cage bar width in the circumferential direction of the bearing cage, and the ring element may have a predetermined ring element thickness in the axial direction of the bearing cage. In particular, the recess may be formed such that the recess only extends into the first ring element. In other words, the recess may not extend into the cage bar. In addition, a width of the at least one cage bar in the circumferential direction at a location in the first connection region may be greater than a width of the at least one cage bar in the circumferential direction at a location axially spaced from the recess. That is, the width of the at least one cage bar in the circumferential direction may increase in the first connection region. Also, the enlargement of the cage bar width in the first connection region may be continuous and occur along a curvature having a radius.

In order to increase the structural load-bearing capacity of the bearing cage, the recess has a curvature having a predetermined radius. In particular, the structural weakening of a bearing cage that includes a recess on the cage bar and ring element, arises primarily due to the recess on the cage bar. Therefore, by providing the recess primarily in the ring element, which may reduce the ring element thickness in the connection region between ring element and cage bar, the cage bar has an essentially consistent cage bar width or even an increase of the cage bar width.

The predetermined radius may be constant along the curvature, or the radius of the curvature varies along the curvature. For example, if the radius of the curvature varies along the curvature, the structural load-bearing capacity of the cage can be optimized by changing the radius of the curvature such that the bearing cage is structurally stronger at locations that are subjected to a higher stress level. Due to the consistent cage bar width or the increase of the cage bar width the structural load-bearing capacity of the cage can be significantly increased, while at the same time a larger radius of curvature is possible in the transition between the cage bar and the ring element. Nevertheless, due to the recess in the ring element an interference with the edge reduction of the roller to be held by the cage, or a jamming of the roller, can be avoided. In particular, the predetermined radius may be characterized by a starting point on the cage bar, namely a location on the cage bar where the recess begins, and a resulting recess depth $y$ in the axial direction. That is, a recess having a curvature with a constant radius $r$ and a recess having a curvature with a radius $r'$ that varies along the curvature may have the same starting point on the cage bar and the same recess depth but may differ with respect to a recess length x in the circumferential direction. Thus, by characterizing the predetermined radius by the starting point on the cage bar, and the resulting recess depth y in the axial direction, it is possible to define, for each variable radius r', an equivalent constant radius r.

Preferably, the curvature radius varies such that the radius increases towards a zone of maximum stress and decreases outside of the zone of maximum stress. This allows to use an increased radius in the most stressed zone, which may lower the resulting stress on the bearing cage and a decreased radius outside this zone, which allows to limit a recess depth. For example, the curvature radius may vary continuously along the curvature. Preferably, the curvature radius may vary exponentially, logarithmically, linearly, and/or according to a polynomial of nth grade.

According to a further preferred embodiment, the bearing cage includes a second ring element, wherein the at least one cage bar is connected to the second ring element at a second connection region, wherein a width of the cage bar in the circumferential direction of the bearing cage at a location in the second connection region is smaller than a width of the at least one cage bar in the circumferential direction of the bearing cage at a location in the first connection region and/or a width of the at least one cage in the circumferential direction of the bearing cage at a location that is axially spaced from the recess.

Here it is particularly advantageous if the recess on the ring element and the cage bar widening in this region is provided not only on the first ring element of the bearing cage but also on the second ring element of the bearing cage, which is disposed axially offset with respect to the first ring element. As is known, the two ring elements are usually connected to the cage bars, and together with the cage bars form pockets for receiving the rolling elements. Due to the design of the recess on both ring elements the structural load-bearing capacity of the cage can be further increased, and a jamming of the roller in the pocket can be avoided.

According to a further preferred embodiment, a pocket configured to receive a rolling element is defined between a first and second cage bar, and the first and second ring elements, wherein a distance between the first and second cage bar in the circumferential direction defines a pocket width, and a distance between the first and second ring element in the axial direction defines a pocket length, wherein a pocket width is minimal at a position which is spaced at 20 to 60 % of the pocket length from the second ring element. This may allow to generate a structure that allows the rolling element to be snapped into the pocket which may allow for a tilting of the rolling element during an assembly of the roller bearing and therefore for an easier assembly of the roller bearing, particularly if the roller bearing has a large diameter.

Preferably, the roller bearing is a tapered roller bearing, and the second ring element has a smaller diameter than the first ring element, wherein the minimal pocket width is located at a position which is spaced at 25-55% of the pocket length from the second ring element. In this case, it may be advantageous if the width of the cage bar in the circumferential direction of the bearing cage at a location in the second connection region may be smaller than the width of the cage bar in the circumferential direction of the bearing cage at a location in the first connection region and the width of the at least one cage in the circumferential direction of the bearing cage at a location that is axially spaced from the connection region.

In other words, in case that the roller bearing is a tapered roller bearing, the width of the cage bar in the circumferential direction of the bearing cage may be smallest in the connection region that connects the cage bar to the smaller ring element of the bearing cage.

The bearing cage itself can be manufactured one-piece, for example, from a metal plate; however it is also possible that the bearing cage is composed of individual elements.

In addition, the recess on the first and/or second ring element may define a minimum ring element thickness $R_{min}$, and the cage has a maximum cage bar width $S_{max}$ at the location of the minimum ring element thickness $R_{min}$. This means that the cage bar in the direction of the minimum ring element thickness $R_{min}$ is preferably continuously widened so that structural weaknesses that could arise, for example due to the formation of the recess, are compensated by the increasing of the cage bar width.

Furthermore, the recess may have a particular recess length x in the circumferential direction of the first and/or second ring element, and a recess depth y in the axial direction, wherein a ratio of recess length x to recess depth y falls in the range of 2 to 10 (2<x/y<10). Such a ratio may allow for an optimal guiding of the rolling elements in the pocket, in particular an optimal abutment of the end surfaces of the rolling elements on the ring elements, and a low influencing or interference between rolling element and cage in the connecting region between cage bar and ring element advantageously occurs. The running and guiding behavior of the bearing cage, as well as its structural integrity or load-bearing capacity can thereby also be improved.

In order to further increase the structural load-bearing capacity of the bearing cage, it is furthermore advantageous if the ratio of the minimum cage bar width $S_{min}$ in the second connection region of the cage bar to the second ring element to a maximum cage bar width $S_{max}$ in the first connection region of the cage bar to the first ring element falls between 0.5 and 1 ($0.5 \leq S_{min}/S_{max} \leq 1$), preferably between 0.8 and 0.99 ($0.8 \leq S_{min}/S_{max} \leq 0.99$).

Alternatively or additionally the ratio between maximum ring element thickness $R_{max}$, in particular the ring element thickness measured in the center of the pocket, and minimum ring element thickness $R_{min}$, measured at the lowest point of the recess, can also fall between 1.05 and 1.4 ($1.05 < R_{max}/R_{min} \leq 1.4$). A bearing cage having at least one of the above-mentioned ratios has a particularly good structural load-bearing capacity.

Furthermore the bearing cage usually has a radial inner side and a radial outer side. Here the inventors have recognized that when the enlargement of the cage bar follows a curvature having the radius r, the radius of curvature $r_a$ on the radially outer side can be greater than the radius of curvature $r_i$ on the radially inner side, in particular when the cage is manufactured by stamping and punching. Here in particular the radius $r_a$ on the radially outer side is defined by using a first tool, in particular a punching tool, and the radius $r_i$ on the radially inner side by using a second tool, in particular a stamping tool. In particular, a center axis of the radius of curvature $r_i$ on the radially inner side and the radius of curvature $r_a$ on the radially outer side may not be parallel. In other words, the center axis of the radius of curvature $r_i$ on the radially inner side and the radius of curvature $r_a$ on the radially outer side may be inclined to each other. For example, the radius of curvature $r_a$ on the radially outer side may be in a direction of the punching tool such as the radial direction, while the radius of curvature $r_i$ on the radially inner side, which is created by the angle from the stamping tool, may be tangential on the roller cage bar contact. Due to this different design of the radii on the outer side and on the inner side the structural integrity of the cage can also be further improved. Also, the feasibility of manufacturing can be improved by having different radii.

Preferably, at least one ring element has a radially extending portion and an axially extending portion which are connected by a bend portion having a radius, wherein the recess is formed such that the recess spaced from the bend portion. For example, if the bearing cage is made from a metal plate, the final cage contour shape is obtained by bending the flat base material in a round shape. This may result in that at least one of the ring elements has a radially extending portion and an axially extending portion which are connected by a bend portion having a radius. If the recess is located and/or designed, for example in terms of size, such that it would cut into the bend portion of the at least one ring element, this could lead to a stress concentration in that region. Thus, for a stress-optimized design it may be important to separate the recess, which may be arranged in a corner of a cage pocket, from the radius of the bend portion of the at least one ring element.

According to a further advantageous exemplary embodiment the bearing cage is manufactured from a metal plate. Here it is particularly advantageous if the metal plate has a particular metal-plate thickness, wherein the radius r of the curvature along which the cage bar enlarges is dependent on the metal-plate thickness t, so that the radius falls in the following defined range:

$$0.12\,t \leq r \leq 2t,$$

wherein t represents a thickness of the metal-plate, measured in units of a dimension, and wherein r represents a radius of curvature, measured in units of a dimension. In particular, t and r may have the same unit. Please note that in case that the radius of curvature is variable r refers to the equivalent constant radius as defined above. Preferably, the radius may be between $0.25t \leq r \leq 1t$. This has the advantage that higher radii may be better for optimizing the structural load-bearing capacity of the bearing cage.

A further advantage of the bearing cage according to the invention lies in that due to the design described above the structural load-bearing capacity of the bearing cage can be increased such that even a reduction of the metal-plate thickness is possible. This in turn leads to a reduction of the material consumption and thus a cost reduction.

A further aspect relates to a rolling-element bearing, in particular a tapered roller bearing, including at least one inner ring, one outer ring, and roller-shaped rolling elements disposed therebetween, wherein the rolling elements are received in a bearing cage as described above.

Furthermore it is advantageous if the roller-shaped rolling elements include a running surface by which they roll on the inner and outer ring, and they are at least partially guided by the cage bar of the bearing cage, and include a first and a second end surface, wherein the first end surface is associated with the first ring element of the bearing cage and the second end surface with the second ring element. It is particularly advantageous here if an edge reduction is provided in a transition region between first and/or second end surface and the running surface so that the first and or second end surface is offset radially inward from the running surface by an edge reduction value k, and in the transition region between running surface and first end surface or second end surface the running surface is shorter by the edge reduction value k than the total longitudinal extension of the roller between first and second end surface. The edge reduction is preferably symmetrical; however it is also possible that edge reduction values differ between running surface and end surface and/or also at the first or second end side.

Furthermore it is advantageous if the recess depth y of the recess on the bearing cage is defined by the edge reduction value k, wherein the radius of the recess curvature in the first connection region satisfies the inequality: $r - y \leq k$. It can thereby be ensured that the edge reduction of the roller-shaped rolling element and the recess do not adversely affect or interfere with each other.

In addition, a ratio of edge reduction value k to the recess depth y may preferably fall in the range between 0.75 and 2.33 ($0.75 \leq k/y \leq 2.33$), even more preferably between 1.2 and 1.8 ($1.2 \leq k/y \leq 1.8$). It can thereby be ensured that the edge reduction of the roller-shaped rolling element and the recess do not adversely affect or interfere with each other.

Furthermore the inventors have found that with a continuous cage bar widening in the connecting region between cage bar and ring element, it is advantageous if the radius of curvature r and the edge reduction value are in a particular ratio to each other wherein the following is true of the radius r:

$$1.1 \cdot k \leq r \leq 1.4 \cdot k$$

Please note that in case that the radius of curvature is variable, r refers to the equivalent constant radius as defined above.

If the rolling-element bearing includes a bearing cage wherein the curvature of the cage bar widening in the connecting region between cage bar and ring element on the outer side of the cage differs from that on the inner side of the cage, then it is also advantageous if the following is true of the radius of the outer side:

$$1.1 \cdot k \leq r_a \leq 1.4 \cdot k$$

And/or the following is true for the inner radius:

$$0.8k \leq r_i \leq 1.1 \cdot k$$

Further preferred embodiments are defined in the dependent claims as well as in the description and the figures. Thereby, elements described or shown in combination with other elements may be present alone or in combination with other elements without departing from the scope of protection.

Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:

FIG. 1 a schematic sectional view through a first exemplary embodiment of a bearing cage according to the disclosure,
FIG. 2 a schematic sectional view through a bearing cage that includes a roller received therein,
FIG. 3 a detailed view of a pocket of the cage of FIG. 1,
FIG. 3a a detailed view of a radius of curvature of a recess of the pocket of the cage of FIG. 1, the detail being identified as detail section 3A of FIG. 3, and
FIGS. 4A and 4B are detail views of the pocket depicted in FIG. 3 with a roller received therein.

Detailed description of the invention

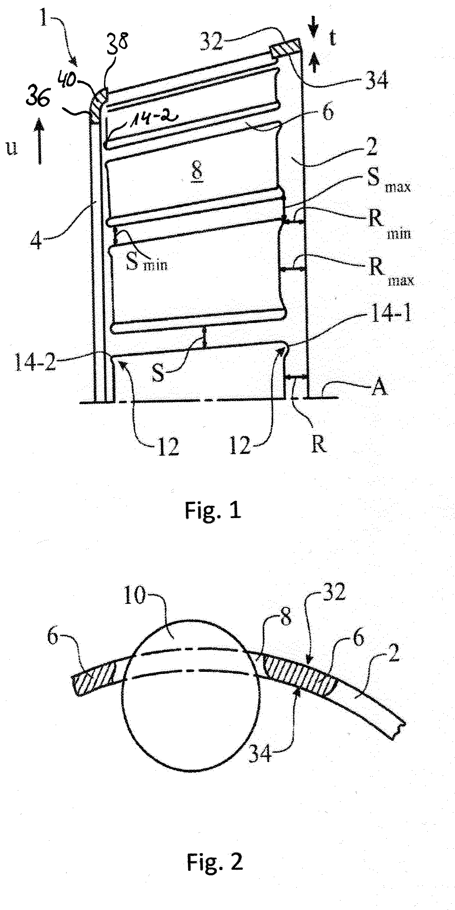

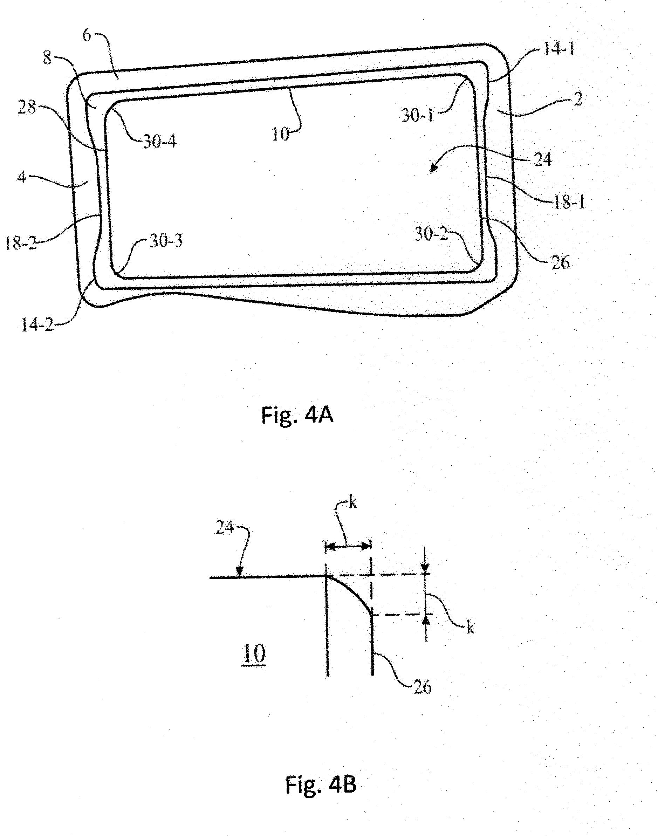

In the following same or similar functioning elements are indicated with the same reference numerals.
A sectional view through a bearing cage 1 of a tapered roller bearing, including a first ring element 2 and a second ring element 4 that are connected to each other by a plurality of cage bars 6 is illustrated in FIG. 1. Pockets 8 are thereby formed between first ring element 2, second ring element 4, and the cage bars 6, in which pockets roller-shaped rolling elements (shown in FIGS. 2 and 4) are receivable. The receiving of a rolling element 10 is depicted in FIG. 2, wherein in addition the ring element 2 and, in sectional view, the cage bars 6 are visible. As can further be seen in FIG. 2, the rolling element 10 is received in the pocket 8. Even though a tapered roller bearing is depicted in the figures, other rolling-element bearings can be equipped with a cage that is similarly equipped in the transition region between cage bar and ring.

The bearing cage itself is usually manufactured from a metal plate. When the flat base material of the bearing cage 1 is formed to the final contour shape of the cage 1 which is usually round, as for example shown in Fig. 1, at least one ring element 2, 4, usually the ring element that has the smaller diameter in case of a bearing cage for tapered rollers 10 has a radially extending portion 36 and an axially extending portion 38 which are connected by a bend portion 40 having a radius.

Furthermore, as can be seen in the sectional view of FIG. 1 the bearing cage 1 has a metal-plate thickness t. Due to the novel design of the bearing cage 1 described below this metal-plate thickness t can be reduced without the structural load-bearing capacity of the bearing cage 1 being impaired.

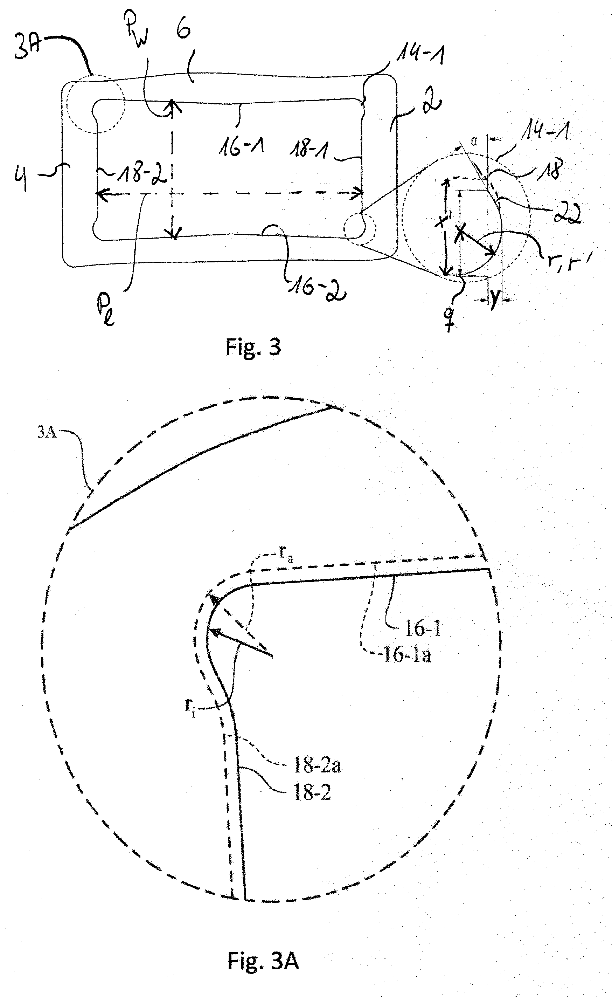

For this purpose the bearing cage 1 further includes a recess 14 - 1, 14 - 2 in a connection region 12 between the cage bar 6 and the first and/or second ring element 2; 4. This recess 14 - 1, 14-2 is configured here such that in this region a reduction of the ring element thickness R is effected specifically to a minimum ring element thickness $R_{min}$, but an enlargement of the cage bar width S is effected specifically to a maximum cage bar width $S_{max}$. The enlargement of the cage bar width S in the first connection region is continuous and occurs along a curvature having a predetermined radius r (Fig. 3). The predetermined radius r may be a constant radius or may vary along the curvature. In particular, the predetermined radius may be characterized by a starting point q on the cage bar 6, and a resulting recess depth y in the axial direction. As can be seen from Fig. 3, a recess 14 having a curvature with a constant radius r (indicated by the solid line) and a recess 14 having a curvature with a radius r' that varies along the curvature (indicated with the dashed line) may have the same starting point q on the cage bar 6 and the same recess depth y but may differ with respect to a recess length x or x' in the circumferential direction.

Preferably, the curvature radius r' varies such that the radius increases towards a zone of maximum stress and decreases outside of the zone of maximum stress. For example, the curvature radius r' may vary continuously along the curvature. Preferably, the curvature radius may vary non-linearly, for example exponentially, logarithmically, and/or according to a polynomial of nth grade. Here, a ring element thickness in the axial direction is measured with respect to an axis of rotation A of the bearing cage 1, while a cage bar width is measured in the circumferential direction U of the bearing cage.

Furthermore, the recess 14 - 1, 14 - 2 is formed such that it is spaced from the bend portion 40. If the recess 14 is located and/or designed, for example in terms of size, such that it would cut into and/or interfere with the bend portion 40 of the ring element 2, 4, it could lead to a stress concentration in that region. Thus, for a stress-optimized design it may be important to separate the recess 14 from the radius of the bend portion 40 of the ring element 4.

In the depicted bearing cage of a tapered roller bearing, the minimum cage bar width $S_{min}$ is preferably measured at a second connection region at the second ring element 4, while the maximum ring element thickness $R_{max}$ is preferably measured in the center of the pocket 8. With cages of other rolling-element bearings the values can be determined at other points.

FIG. 3 shows an example of a pocket. Only one pocket is depicted here. The cage bar and ring element are depicted only in section, and each show their inner edges 18 - 1, 18-2 (ring element) or 16 - 1, 16-2 (cage bars) so that no ring element thickness or cage bar width is visible here. Furthermore, FIG. 3 shows in particular in the enlarged cutouts that the recess 14-1 has a certain recess length x in the circumferential direction and a recess depth y. It has further proven here that is advantageous if the ratio between recess length x and recess depth y falls in the range from 2 to 10:

$$2 \leq x/y \leq 10$$

Furthermore the enlarged cutouts show that the transition from the recess 14 to the inner edge 18 of the pocket is effected such that a tangent 22 to the recess progress line is angled at an angle $\alpha$ with respect to the inner edge 18. The angle $\alpha$ preferably falls in the range of 10°-40°.

As can be seen in Fig. 3, the pocket 8 has a pocket width $P_w$, and a pocket length Pi, wherein the pocket width $P_w$ is minimal at 20 to 60 % of the pocket length Pi. For example, in case of a tapered roller bearing, the minimal pocket width $P_w$ is located at a position which is spaced 25-55% of the pocket length Pi from the second ring element 4. Thus, for a tapered roller bearing, the width of the cage bar 6 is smallest in the connection region that connects the cage bar to the smaller ring element 4 of the bearing cage 1.

Furthermore it can be seen in FIG. 3 that the transition from minimum ring element thickness $R_{min}$ to increased cage bar width S occurs continuously and along a curvature having radius r. As mentioned above, the radius r varies along the recess.

Furthermore FIG. 4A shows an exemplary embodiment of the cage as in FIG. 3 with roller 10 received therein. As can further be seen in FIGS. 4A and 4B, the roller 10 includes a running surface 24, via which the roller 10 rolls along on the inner or outer ring of the rolling-element bearing (not depicted) and is guided by the cage bar 6. Furthermore the roller 10 includes a first end surface 26 that is associated with the first ring element 2, and a second end surface 28 that is associated with the second ring element 4. Both end surfaces 26, 28 interact with the inner side 18 of the ring elements 2, 4. As can further be seen from Fig. 4A and 4B, each roller 10 includes an edge reduction 30 - 1, 30 - 2, 30 - 3, 30 - 4 at the transition region between running surface 24 and the end surfaces 26, 28. One of these edge reductions 30 - 1 is depicted enlarged in FIG. 4B. Here the running surface or the first or second end surface is respectively reduced by an edge reduction value k. As depicted, the edge reduction is preferably symmetrical.

The edge reduction value k in turn determines the recess depth y, wherein the radius r of the recess curvature in the connection region satisfies the inequality: $r - y \leq k$.

In addition, a ratio of edge reduction value k to the recess depth y preferably falls in the range between 0.75 and 2.33, $0.75 \leq k/y \leq 2.33$, more preferably between 1.2 and 1.8, $1.2 \leq k/y \leq 1.8$.

It can be ensured by this relationship that an optimal balance is achieved between the edge reduction k and the recess y, so that no interference arises between roller 10 and cage 1. It can thereby also be ensured that a sufficiently large curvature radius r, r' or an enlargement of the cage bar widths S can be effected without the roller 10 jamming in the cage 1.

Furthermore it can be advantageous if the cage has a different radius on its radially outer surface 32 (see FIG. 1) than on its radially inner surface 34 (see FIG. 1). These different radii $r_i$, $r_a$ are identified in an enlarged section of FIG. 3 illustrated in FIG. 3A. However, it is advantageous if the outer radius $r_a$ of the curvature is generally greater than the inner radius $r_i$ of the curvature, and the outer radius $r_a$ is usually provided by a first tool and the inner radius $r_i$ is provided by a second tool. More specifically, the bearing cage 1 has a radially inner side 34 and a radially outer side 32, wherein a radius of curvature $r_a$ located on the radially outer side 32 is greater than a radius of curvature $r_i$, located on the radially inner side 34 and wherein the radius of curvature $r_a$ located on the radially outer side 32 is formed by an application of a punching tool and the radius of curvature $r_a$ located on the radially inner side 34 is formed by an application of a second stamping tool. Thus it is advantageous; for example, if the outer radius $r_a$ is provided by punching of a metal plate, while the inner radius $r_i$ is formed by a subsequent stamping treatment of the bearing cage.

Overall, using the disclosed bearing cage design a bearing cage can be provided whose structural load capacity is increased such that it even allows to form a bearing cage for a large diameter bearing, in particular for a wind turbine, from a metal plate. In addition, interference and thus jamming of the rollers 10 in the cage pockets 8 can be reliably prevented despite increased radius of curvature r between cage bar 6 and ring element 2, 4. At the same time, by adapting the recess length x and recess depth y the cage 1 can be optimally adapted to the desired properties.

Reference numerals

| 1 | Bearing cage |
|---|---|
| 2 | First ring element |
| 4 | Second ring element |
| 6 | Cage bar |
| 8 | Pocket |
| 10 | Roller |
| 12 | Connection region |
| 14-1 | Recess |
| 14-2 | Recess |
| 16 - 1, 16 - 2 | Cage bar inner edge |
| 18, 18 - 1 18-2 | Ring element inner edge |
| 22 | Transition between recess and inner edge of the ring element |
| 24 | Running surface of the roller |
| 26, 28 | End surface of the roller |
| 30 - 1 - 30-4 | Edge reduction |
| 32 | Radially outer side/edge |
| 34 | Radially inner side |
| 36 | radially extending portion |
| 38 | axially extending portion |
| 40 | bend portion |
| $\alpha$ | angle |
| r, $r_a$, $r_i$, r' | Radius of curvature |
| k | Edge reduction value |
| t | Metal-plate thickness |
| S, $S_{min}$, $S_{max}$ | Cage bar width |
| R, $R_{min}$, $R_{max}$ | Ring element thickness |
| x, x' | Recess length |
| q | recess starting point |
| y | Recess depth |
| u | Circumferential direction |
| A | Axial direction |
| $P_w$ | pocket width |
| Pi | pocket length |

**Claims**

1. Bearing cage (1) configured for use in a roller bearing, in particular a roller bearing having a large diameter, the bearing cage (1) comprising at least:

   a first ring element (2) extending in a circumferential direction (u) of the bearing cage (1),
   at least one cage bar (6) extending substantially in an axial direction of the bearing cage (1), wherein the at least one cage bar (6) is connected to the first ring element (2) at a first connection region (12), wherein in the first connection region (12) a recess (14) is provided which extends into the first ring element (2), **characterized in that** the recess (14) has a curvature having a predetermined radius (r, r').

2. Bearing cage (1) according to claim 1, wherein the predetermined radius (r) is constant along the curvature or the radius (r') of the curvature varies along the curvature.

3. Bearing cage (1) according to claim 2, wherein the curvature radius (r') varies such that the radius (r') increases towards a zone of maximum stress and decreases outside of the zone of maximum stress.

4. Bearing cage (1) according to claim 2 or 3, wherein the curvature radius (r') varies continuously along the curvature, wherein preferably the curvature radius (r') varies exponentially, logarithmically, and/or according to a polynomial of nth grade.

5. Bearing cage (1) according to any one of the previous claims, wherein the bearing cage (1) includes a second ring element (4), wherein the at least one cage bar (6) is connected to the second ring element (4) at a second connection region (12), wherein a width (S) of the cage bar (6) in the circumferential direction (u) of the bearing cage (1) at a location in the second connection region (12) is smaller than a width (S) of the at least one cage bar (6) in the circumferential direction (u) of the bearing cage (1) at a location in the first connection region (12) and/or a width (S) of the at least one cage in the circumferential direction (u) of the bearing cage (1) at a location that is axially spaced from the recess (14).

6. Bearing cage (1) according to claim 5, wherein a pocket (8) configured to receive a rolling element (10) is defined between a first and second cage bar (6), and the first and second ring elements (2, 4), wherein a distance between the first and second cage bar (6) in the circumferential direction (u) defines a pocket width ($P_w$), and a distance between the first and second ring element in the axial direction defines a pocket length (Pi), wherein a pocket width ($P_w$) is minimal at a position which is spaced 20 to 60 % of the pocket length (Pi) from the second ring element (4).

7. Bearing cage (1) according to claim 6, wherein the roller bearing is a tapered roller bearing, and the second ring element (4) has a smaller diameter than the first ring element (2), wherein the minimal pocket width ($P_w$) is located at a position which is spaced 25-55% of the pocket length (Pi) from the second ring element (4).

8. Bearing cage (1) according to any one of the previous claims,

wherein the bearing cage (1) has a radially inner side and a radially outer side, wherein a radius of curvature ($r_a$) located on the radially outer side is greater than a radius of curvature ($r_i$) located on the radially inner side, and
wherein the radius of curvature located on the radially outer side is formed by an application of a punching tool and the radius of curvature located on the radially inner side is formed by an application of a second stamping tool, wherein preferably a center axis of the radius of curvature ($r_i$) on the radially inner side and the radius of curvature ($r_a$) on the radially outer side are inclined to each other.

9. Bearing cage (1) according to any one of the previous claims, wherein the bearing cage (1) is manufactured from a metal plate.

10. Bearing cage (1) according to any one of the previous claims, wherein at least one ring element (2, 4) has a radially extending portion (36) and an axially extending portion (38) which are connected by a bend portion (40) having a radius, wherein the recess (14) is formed such that the recess (14) is spaced from the bend portion (40).

11. Roller bearing comprising:

at least one inner ring,
one outer ring, and
roller elements (10) disposed between the at least one inner ring and the outer ring, wherein the rolling elements are received in the bearing cage (1) according to any one of the previous claims.

12. Roller bearing according to claim 11,

wherein the roller elements (10) have a running surface (24) configured to roll on the inner ring and the outer ring and to at least partially contact the first cage bar (6), and a first and a second end surface (26, 28),
wherein the first end surface faces the first ring element (2), and the second end surface faces the second ring element (4),
wherein at a transition region (22) between first end surface and the running surface an edge reduction (30) is provided so that the first end surface is offset radially inward by an edge reduction value (k) of the running surface, and such that the running surface is shorter by the edge reduction value (k) than a total longitudinal extension of the roller elements (10) between first and second end surface (26, 28),
wherein a recess depth (y) of the recess (14) on the bearing cage (1) is defined by the edge reduction value (k), and
wherein the radius of the recess curvature in the first connection region (12) satisfies the inequality: $r - y \leq k$.

Fig. 1

Fig. 2

Fig. 3

Fig. 3A

Fig. 4A

Fig. 4B

Europäisches
Patentamt

European
Patent Office

Office européen
des brevets

# EUROPEAN SEARCH REPORT

Application Number

EP 24 19 1720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/285117 A1 (HARICH ROLAND [DE]) 19 September 2019 (2019-09-19) * figures 1-5b * | 1,2,8-12 | INV. F16C19/36 F16C33/46 F16C33/54 |
| X | US 10 330 146 B2 (NTN TOYO BEARING CO LTD [JP]) 25 June 2019 (2019-06-25) * figures 1,3,4,6,7,9,10 * | 1-7,9-11 | |

TECHNICAL FIELDS
SEARCHED        (IPC)

F16C

The present search report has been drawn up for all claims

| Place of search | Date of completion of the search | Examiner |
|---|---|---|
| The Hague | 29 November 2024 | Cerva-Pédrin, Sonia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................
& : member of the same patent family, corresponding
    document

EPO FORM 1503 03.82 (P04C01)

**EP 4 506 579 A1**

## ANNEX TO THE EUROPEAN SEARCH REPORT
## ON EUROPEAN PATENT APPLICATION NO.

EP 24 19 1720

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| US 2019285117 | A1 | 19-09-2019 | CN | 110273923 A | 24-09-2019 |
| | | | DE | 102018203914 A1 | 19-09-2019 |
| | | | US | 2019285117 A1 | 19-09-2019 |
| US 10330146 | B2 | 25-06-2019 | CN | 107923440 A | 17-04-2018 |
| | | | DE | 112016003880 T5 | 24-05-2018 |
| | | | JP | 2017044281 A | 02-03-2017 |
| | | | US | 2018245627 A1 | 30-08-2018 |
| | | | WO | 2017033977 A1 | 02-03-2017 |

EPO FORM P0459

For more details about this annex : see Official Journal of the European Patent Office, No. 12/82

13